# EUROPEAN PATENT SPECIFICATION

(11) **EP 4 461 621 B1**
(45) Date of publication and mention of the grant of the patent: **15.04.2026**
(21) Application number: 24172854.2
(22) Date of filing: 26.04.2024
(51) Int. Cl.: B62D 5/07, B62D 5/06, B62D 5/065

(54) **METHOD FOR MANAGING A HYDRAULIC CIRCUIT OF AN ELECTRIC WORK VEHICLE**
VERFAHREN ZUR STEUERUNG EINES HYDRAULIKKREISLAUFS EINES ELEKTRISCHEN ARBEITSFAHRZEUGS
PROCÉDÉ DE GESTION D'UN CIRCUIT HYDRAULIQUE D'UN VÉHICULE DE TRAVAIL ÉLECTRIQUE

(30) Priority: 08.05.2023 IT 202300009054
(43) Date of publication of application: 13.11.2024
(73) Proprietor: CNH Industrial Italia S.p.A., 10156 Torino (IT)
(72) Inventor: GARRAMONE, Adriano, 10156 Turin (IT); LIBERTI, Stefano, 10156 Turin (IT); VENEZIA, Antonio, 10156 Turin (IT); GRAVILI, Andrea, 10156 Turin (IT)
(74) Representative: CNH Industrial IP Department

(56) References cited:
- JP-A- 2006 321 270
- US-A1- 2004 149 498
- US-A1- 2006 260 301

## Description

### Field of the invention

The present invention relates to the field of electric work vehicles, including the so-called Wheel Loaders and in particular in the field of electric work vehicles equipped with a single hydraulic circuit for actuation of at least one hydraulic member and of the vehicular power steering, where the circuit is supplied by a fixed displacement hydraulic pump driven in rotation by an electric motor and in which an oil flow generated by the hydraulic pump is regulated by means of an open center proportional directional valve.

### State of the art

Compact Wheel Loaders and Wheel Loaders are work machines equipped with a mechanical arm to which a bucket is connected for moving material or earthmoving. Even some agricultural vehicles can be equipped with arms and hydraulic organs.

What this category of vehicles, generically referred to as work vehicles, has in common is that they are entirely electric propelled. Therefore, they are not equipped with an internal combustion engine, but with an electric propulsion motor which acts on at least one wheel without any hydrostat.

However, electric work vehicles maintain the hydraulic actuation circuit of the boom and/or other work members. This means that a hydraulic pump driven by an electric motor is provided. As long as no hydraulic components are activated, the hydraulic pump remains deactivated to save electric energy. This can happen, for example, while the vehicle is traveling from one workplace to another one. According to some schemes, the power steering is also fed by the same pump that feeds the working organ(s)

According to other schemes, the power steering is equipped with a pump that is independent of the other hydraulic organs. However, even if this solution turns out to be more flexible, it reduces the efficiency from an electrical point of view.

US2004/149498 A1 discloses a controller for the steering apparatus of an electric industrial vehicle.

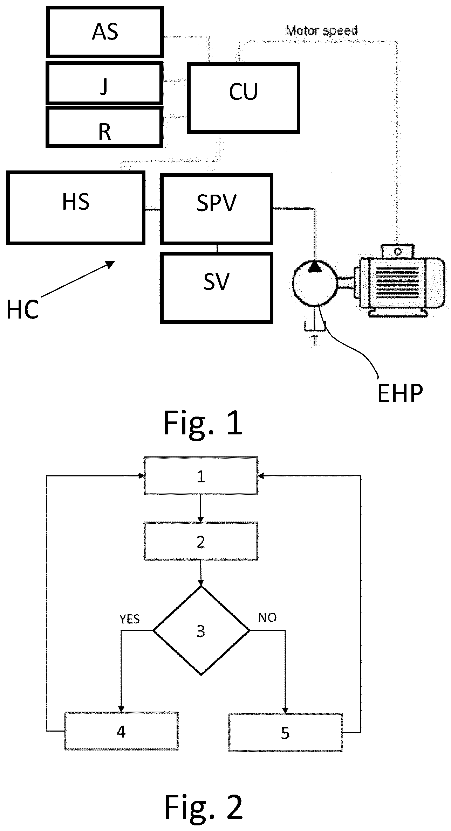

Figure 1 shows an hydraulic circuit HC of the prior art comprising an exclusively electrically driven hydraulic pump EHP.

This is arranged to feed a valve or a priority circuit SPV which has the task of feeding a priority control valve of the power steering SV. The power steering actuator, although present, is not shown.

The excess oil flow, generated by the hydraulic pump, is sent to the hydraulic services indicated with the block HS. Hydraulic services are used to implement a work organ such as an arm and/or bucket.

These include at least one hydraulic actuator and a related proportional, directional open center control valve.

The excess oil is sent to the recovery tank T, from where the oil is withdrawn to be pumped back into the circuit.

The presence of the priority valve or circuit SPV evidently excludes the implementation of a hydraulic pump dedicated to the power steering actuator. In other words, it is evident that the oil flow generated by the hydraulic pump is shared between the power steering and the hydraulic services HS.

A known solution provides for the electric pump to be kept constantly in operation to guarantee hydraulic flow to the power steering.

It is believed that this solution is not optimal.

According to a scheme in which the electric pump supplies only the auxiliary services with the power steering supplied by a separate hydraulic pump, it is possible to save electricity in the following way:
when the control lever, such as a joystick J or a roller R, of a hydraulic actuator of the hydraulic services is released, the corresponding open center directional valve is in the released position (neutral) and simultaneously the electric pump is switched off. Conversely, when the control lever is deflected from the release position, the open center directional valve shutter is moved to a position other than the release position and the electric pump is activated at a rotational speed proportional to the deflection of the lever.

However, this solution is inefficient when there is only one hydraulic pump supplying the power steering together with the hydraulic services, as in the present invention.

Unless specifically excluded in the detailed description that follows, what is described in this chapter is to be considered as an integral part of the detailed description.

### Summary of the invention

The object of the present invention is to propose a method for managing the hydraulic circuit of an electric work vehicle suitable for optimizing the consumption of electric energy, without compromising the performance of the vehicle itself.

The basic idea of the present invention is to automatically activate the hydraulic pump bringing it to a rotation speed value which represents the greater value between
- A first value proportional to the rotation speed of the steering wheel,
- A second value proportional to a deflection angle of the control lever of a hydraulic actuator.

Preferably, when the steering wheel is stationary and the actuator control lever is also released, then the hydraulic pump is maintained at a rotational speed lower than a predetermined threshold called "minimum speed".

The first value and the second value are preferably in a look up table.

Advantageously, the hydraulic pump is activated only if this is actually necessary and the calculation of the flow rate required from the pump is a function of the oil consumer that needs the greater flow rate, while ensuring efficiency at the same time.

By "minimum speed" it is meant a relatively low speed or equal to zero, which can be a function of other operating parameters of the hydraulic circuit independent of any man/machine interface.

Preferably, the "minimum speed" is a function of the hydraulic oil temperature and when the hydraulic oil temperature exceeds a predetermined threshold, then said "minimum speed" is equal to zero.

Conveniently, when the hydraulic oil is at the correct operating temperature, the hydraulic pump is completely deactivated when there is no need to generate a flow of hydraulic oil.

The dependent claims describe preferred variants of the invention, forming an integral part of the present description.

### Brief description of the figures

Further objects and advantages of the present invention will become clear from the detailed description that follows of an embodiment of the same (and of its variants) and from the annexed drawings given for purely explanatory and nonlimiting purposes, in which:
Fig. 1 shows an electro-hydraulic actuation diagram of at least one hydraulic member such as an arm and/or a bucket and a vehicular power steering;
Fig. 2 shows an exemplary flow diagram of the method object of the present invention;
Fig. 3 shows an example of a work vehicle in which the present invention is implemented.

The same reference numbers and letters in the figures identify the same elements or components or functions.

It should also be noted that the terms "first", "second", "third", "superior", "inferior" and the like may be used herein to distinguish various items. These terms do not imply a spatial, sequential, or hierarchical order for the modified items unless specifically indicated or inferred from the text.

The elements and characteristics illustrated in the various preferred embodiments, including the drawings, can be combined with each other without however departing from the scope of protection of the present application as described below.

### Detailed description

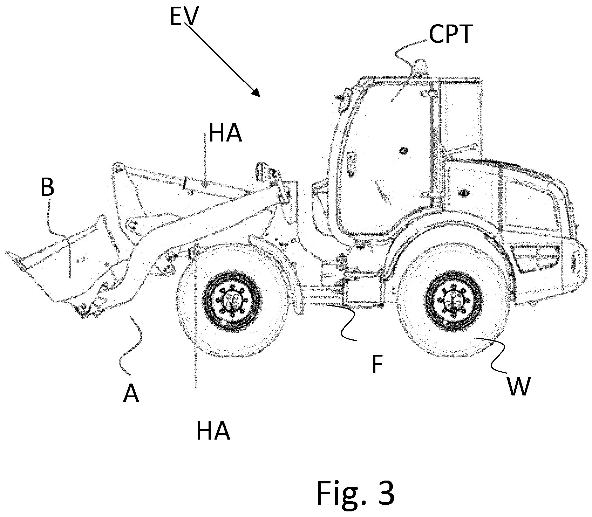

Fig. 1 shows an electro-hydraulic diagram for controlling the movement of a work member, such as for example an arm A and/or a bucket B shown in Fig. 3.

Fig. 3 shows an EV electric work vehicle, for example a loader vehicle, but the present invention also finds application in agricultural vehicles. Therefore, the term "work vehicle" refers to construction, earthmoving and agricultural vehicles. No thermal engine is included.

Evidently, the vehicle EV is equipped with an electric energy source, such as a battery pack or a fuel cell for powering an electric propulsion motor (not shown), operatively connected to at least one vehicle wheel W.

The vehicle has a user location CPT, which houses at least one man/machine interface device, typically a joystick J and/or a wheel R to control the arm and/or the bucket.

In the example of figure 3, the arm A has an elongated shape with a first end hinged to the vehicle chassis F, and a second end, opposite to the first, arranged to support a bucket B. The mechanical connections between the arm and the vehicle chassis and between bucket and arm are rotatable to form hinges in a manner per se known.

The arm A, the bucket B and, in general, any work member is operated by means of a hydraulic actuator HA.

Fig. 1 therefore shows an electro-hydraulic circuit HC in which a single electric hydraulic pump EHP, arranged to be powered by the aforementioned electric energy source, supplies the hydraulic circuit HC and in particular the hydraulic actuator HA forming part of the so-called hydraulic services HS, which also include an open center proportional directional valve (not shown) for control of the hydraulic actuator HA.

When the solenoid valve is in the rest position, the oil pumped by the hydraulic pump is directed to a collection tank T. The hydraulic pump is arranged to recirculate the oil flowing into the collection tank in the hydraulic circuit.

According to the diagram in Figure 1, the hydraulic oil is pumped to the priority valve or circuit SPV arranged to feed the power steering control valve SV as a priority and the excess oil is sent to the hydraulic services HS.

According to the present invention, the hydraulic pump is deactivated when the man/machine interface means are released. In other words, if the operator does not act on the joystick J or on the wheel R or on the steering wheel, the hydraulic pump is deactivated or in any case kept at a minimum speed.

An action by the operator on the joystick and/or wheel R and/or steering wheel can be associated with a consequent generation of a command signal.

More particularly, regarding the steering wheel, an angular sensor AS is associated with the relative steering column to measure an angular position of the same.

According to the present invention, the steering wheel angular position signal is acquired and derived over time to calculate the steering wheel actuation rate by the operator. According to the table below, an example is shown of calculating the rotational speed of the hydraulic pump EHP as a function of the rotational speed of the steering wheel:

| Steering wheel speed (Rouds/s) | Hydraulic pump speed (RPM) |
|---|---|
| 0,2 | 600 |
| 0,4 | 800 |
| 0,6 | 1000 |
| 0,8 | 1200 |
| 1,0 | 1400 |

### Example Table: Steering rotation speed - Hydraulic pump rotation speed

In the same way, a deviation value of a lever J or of a roller R is constantly acquired, with respect to a relative rest position, for controlling a hydraulic actuator and a second rotation speed value of the hydraulic pump EHP is calculated. In particular, the second rotation speed value of the hydraulic pump is proportional to the deviation of the lever and/or roller with respect to the relative rest position.

Subsequently, the greater value between the first speed value and the second speed value of the hydraulic pump is selected and, accordingly, the hydraulic pump speed is regulated.

The position of the open center directional valve shutter controlling the hydraulic actuator HA of hydraulic services HS is proportional to this deviation.

Obviously, reference is made only to a first speed value and to a second speed value, however the consumers of hydraulic oil can be multiple and the selection of the highest value can be carried out among three or more speed values relating to as many consumers.

It is further worth pointing out that the second speed value can be zero, when for example only the steering wheel is operated while the joystick and/or roller are released.

The method of the present invention can be summarized as follows:
a single hydraulic pump EHP electric or in any case driven exclusively by an electric motor is configured to feed a hydraulic power steering SV and at least one hydraulic actuator HA of a work member A, B of the electric work vehicle, such as for example an arm and/or or a bucket.

The hydraulic pump is configured to activate in response to
- a first signal, generated by a position sensor AS associated with the steering wheel, for controlling the power steering, and
- at least a second signal, generated by interface means J, R, different from said steering wheel, to control at least one hydraulic actuator, different from the power steering.

The method includes
+ (Step 2) a calculation procedure of
   - a first speed value of the hydraulic pump as a function of the steering actuation speed and
   - at least a second rotation speed value of the hydraulic pump as a function of a deviation of the second interface means J, R, with respect to a relative release position,
+ (Step 4) controlling the hydraulic pump according to the higher value between the first and at least one second speed value.

With reference to Fig. 2, the method evidently comprises
+ (Step 1) acquisition of the first and second signal;
+ (Step 2) calculation of the first and second speed value as described above;
+ (Step 3) checking that at least one of said first and second values is greater than zero, if so:
   + (Step 4) regulating the hydraulic pump speed as described above, or if not
   + (Step 5) regulating the hydraulic pump speed according to a minimum speed value.

However, as described above, the minimum speed value can be greater than or equal to zero, preferably, depending on the temperature of the hydraulic oil.

In particular, it is greater than zero when the hydraulic oil temperature is lower than a predetermined threshold and equal to zero when the hydraulic oil temperature is greater than or equal to the predetermined threshold.

For example, the minimum speed can be expressed through the following table as follows:

| Hydraulic oil temperature (°C) | Minimum speed(RPM) |
|---|---|
| -25 | 700 |
| -20 | 800 |
| -15 | 900 |
| -10 | 1000 |
| -5 | 1100 |
| 0 | 1300 |
| 10 | STOP |

Conveniently, circulating the hydraulic oil through the priority valve and then through the hydraulic services open center directional valve is exploited to warm the hydraulic oil in cold ambient conditions.

The present method is advantageously implemented by means of a processing unit CU configured to receive as input the signals generated by the sensor AS and/or by the joystick J and/or by the wheel R and to control the hydraulic pump EHP accordingly.

Evidently there may also be a temperature sensor not shown which is also operationally connected to the processing unit CU.

The present invention can advantageously be implemented through a computer program comprising coding means for carrying out one or more steps of the method, when this program is executed on a computer. Therefore it is understood that the scope of protection extends to said computer program and also to computer-readable means comprising a recorded message, said computer-readable means comprising program coding means for carrying out one or more steps of the method, when said program is run on a computer. From the description given above, the person skilled in the art is capable of realizing the object of the invention without introducing further constructive details.

## Claims

1. Method for managing a hydraulic circuit of an electric work vehicle (EV), the hydraulic circuit (HC) comprising a single electric hydraulic pump (EHP) configured to supply:
- a hydraulic power steering (SV), and
- at least one hydraulic actuator (HA) of a working element (A, B) of the electric work vehicle, the hydraulic pump being configured to activate in response to:
. a first signal, generated by a position sensor (AS) associated with a steering wheel, to control said power steering, and/or
. at least a second signal, generated by interface means (J, R), different from said steering, to control said at least one hydraulic actuator, different from the power steering, the method including a calculation procedure of:
- a first speed value of the hydraulic pump as a function of an actuation speed of said steering wheel; and
- at least one second rotation speed value of the hydraulic pump as a function of a deviation of said second interface means (J, R,) with respect to a relative release position, the method being **characterized by** further including controlling of the hydraulic pump according to the higher value between said first and at least second speed value;
wherein said hydraulic pump is configured to maintain a rotational speed lower than or equal to a predetermined minimum speed in the absence of said first and second signals;
wherein said minimum speed is greater than zero when a temperature of a hydraulic oil in the hydraulic circuit is lower than a predetermined threshold and equal to zero when said temperature is greater than or equal to said predetermined threshold.

2. Method according to claim 1, wherein said first speed value of the hydraulic pump is expressed by means of a look up table as a function of the actuation speed of said steering wheel.

3. Method according to claim 2 comprising the following steps in cyclical succession:
- (Step 1) Acquisition of said first signal and of said second signal;
- (Step 2) Calculation of said first and second speed values;
- (Step 3) checking that at least one of said first and second values is greater than zero, if so
- (Step 4) regulating the pump speed according to the higher value between the first and at least one second speed value, or if not
- (Step 5) regulating the pump speed according to a minimum speed value.

4. A processing unit (CU) for controlling a hydraulic circuit (HC) of an electric work vehicle, the hydraulic circuit comprising an electric hydraulic pump (EHP) configured to power
- a hydraulic power steering (SV) and
- at least one hydraulic actuator (HA) of a working element (A, B) of the electric work vehicle,
the hydraulic pump being configured to activate in response to
. a first signal, generated by a position sensor (AS) associated with a steering wheel, for controlling said power steering, and
. at least a second signal, generated by interface means (J, R,), different from said steering, to control said at least one hydraulic actuator, different from the power steering,
wherein the processing unit is configured for calculating:
- a first speed value of the hydraulic pump as a function of an actuation speed of said steering; and
- at least one second rotation speed value of the hydraulic pump as a function of a deviation of said second interface means (J, R,) with respect to a relative release position,
the processing unit being **characterized by** being configured for:
regulating the hydraulic pump speed according to the higher value between said first and at least second speed values, the processing unit being further configured to regulating the hydraulic pump to maintain a rotational speed lower than or equal to a predetermined minimum speed in the absence of said first and second signals; wherein said minimum speed is greater than zero when a temperature of a hydraulic oil in the hydraulic circuit is lower than a predetermined threshold and equal to zero when said temperature is greater than or equal to said predetermined threshold.

5. A computer program comprising instructions for causing the processing unit of claim 4 to implement the method according to any one of claims 1 - 3.

6. A computer readable medium having stored the program of claim 5.

7. Electric work vehicle (EV) comprising:
- at least one work member, such as an arm (A) and/or a bucket (B),
- a hydraulic power steering (SV) ed
- at least one hydraulic actuator (HA) for moving said at least one work member (A, B),
- a hydraulic circuit (HC) comprising an electric hydraulic pump (EHP) configured to power said hydraulic actuator and said power steering, wherein the hydraulic pump is configured to activate in response to:
. a first signal, generated by a position sensor (AS) associated with a steering wheel, for controlling said power steering, and
. at least a second signal, generated by interface means (J, R,), different from said steering, to control said at least one hydraulic actuator, different from the power steering, and
- a processing unit according to claim 4.

## Patentansprüche

1. Verfahren zum Verwalten eines Hydraulikkreises eines elektrischen Arbeitsfahrzeugs (EV), wobei der Hydraulikkreis (HC) eine einzige elektrische Hydraulikpumpe (EHP) umfasst, die konfiguriert ist, um zu versorgen:
- eine hydraulische Servolenkung (SV) und
- mindestens einen hydraulischen Aktuator (HA) eines Arbeitselements (A, B) des elektrischen Arbeitsfahrzeugs,
wobei die Hydraulikpumpe konfiguriert ist, um in Reaktion auf Folgendes zu aktivieren:
. ein erstes Signal, das von einem Positionssensor (AS) erzeugt wird, der einem Lenkrad zugeordnet ist, um die Servolenkung zu steuern, und/oder
. mindestens ein zweites Signal, erzeugt durch Schnittstellenmittel (J, R), verschieden von der Lenkung, um den mindestens einen hydraulischen Aktuator, verschieden von der Servolenkung, zu steuern,
wobei das Verfahren umfasst
ein Berechnungsverfahren o:^{:}
- einen ersten Geschwindigkeitswert der Hydraulikpumpe als Funktion einer Betätigungsgeschwindigkeit des Lenkrads und
- mindestens einen zweiten Drehzahlwert der Hydraulikpumpe als Funktion einer Abweichung der zweiten Schnittstellenmittel (J, R,) bezüglich einer relativen Freigabeposition,
wobei das Verfahren **gekennzeichnet ist durch** weiteres Einschließen einer Steuerung der Hydraulikpumpe gemäß dem höheren Wert zwischen dem ersten und mindestens zweiten Geschwindigkeitswert;
wobei die Hydraulikpumpe konfiguriert ist, um eine Drehzahl aufrechtzuerhalten, die niedriger als oder gleich einer vorbestimmten Mindestgeschwindigkeit ist, wenn das erste und zweite Signal fehlen;
wobei die Mindestgeschwindigkeit größer als Null ist, wenn eine Temperatur eines Hydrauliköls in dem Hydraulikkreis niedriger als ein vorbestimmter Schwellenwert ist, und gleich Null ist, wenn die Temperatur größer als oder gleich dem vorbestimmten Schwellenwert ist.

2. Verfahren nach Anspruch 1, wobei der erste Geschwindigkeitswert der Hydraulikpumpe mittels einer Nachschlagetabelle als Funktion der Betätigungsgeschwindigkeit des Lenkrads ausgedrückt wird.

3. Verfahren nach Anspruch 2, umfassend die folgenden Schritte in zyklischer Abfolge:
- (Schritt 1) Erfassen des ersten Signals und des zweiten Signals;
- (Schritt 2) Berechnung des ersten und zweiten Geschwindigkeitswerts;
- (Schritt 3) Überprüfen, dass mindestens einer des ersten und zweiten Werts größer als Null ist, falls ja
- (Schritt 4) Regeln der Pumpengeschwindigkeit entsprechend dem höheren Wert zwischen dem ersten und mindestens einem zweiten Geschwindigkeitswert, oder falls nicht
- (Schritt 5) Regeln der Pumpengeschwindigkeit gemäß einem minimalen Geschwindigkeitswert.

4. Verarbeitungseinheit (CU) zur Steuerung eines Hydraulikkreises (HC) eines elektrischen Arbeitsfahrzeugs, wobei der Hydraulikkreis eine elektrische Hydraulikpumpe (EHP) umfasst, die konfiguriert ist zum Antreiben von
- einer hydraulischen Servolenkung (SV) und
- mindestens einem hydraulischen Aktuator (HA) eines Arbeitselements (A, B) des elektrischen Arbeitsfahrzeugs,
wobei die Hydraulikpumpe konfiguriert ist, um in Reaktion auf Folgendes zu aktivieren
. ein erstes Signal, das von einem Positionssensor (AS) erzeugt wird, der einem Lenkrad zugeordnet ist, zum Steuern der Servolenkung und
. mindestens ein zweites Signal, erzeugt durch Schnittstellenmittel (J, R), verschieden von der Lenkung, um den mindestens einen hydraulischen Aktuator, verschieden von der Servolenkung, zu steuern,
wobei die Verarbeitungseinheit konfiguriert ist zum Berechnen von:
- einem ersten Geschwindigkeitswert der Hydraulikpumpe als Funktion einer Betätigungsgeschwindigkeit der Lenkung und
- mindestens einem zweiten Drehzahlwert der Hydraulikpumpe als Funktion einer Abweichung der zweiten Schnittstellenmittel (J, R,) bezüglich einer relativen Freigabeposition, wobei die Verarbeitungseinheit **gekennzeichnet ist durch** eine Konfiguration für:
Regeln der Hydraulikpumpengeschwindigkeit gemäß dem höheren Wert zwischen dem ersten und mindestens zweiten Geschwindigkeitswert, wobei die Verarbeitungseinheit ferner konfiguriert ist, um die Hydraulikpumpe zu regeln, um eine Drehgeschwindigkeit aufrechtzuerhalten, die niedriger als oder gleich einer vorbestimmten Mindestgeschwindigkeit ist, wenn das erste und zweite Signal fehlen; wobei die Mindestgeschwindigkeit größer als Null ist, wenn eine Temperatur eines Hydrauliköls in dem Hydraulikkreis niedriger als ein vorbestimmter Schwellenwert ist, und gleich Null ist, wenn die Temperatur größer als oder gleich dem vorbestimmten Schwellenwert ist.

5. Computerprogramm, das Anweisungen umfasst, um die Verarbeitungseinheit nach Anspruch 4 zu veranlassen, das Verfahren nach einem der Ansprüche 1 bis 3 zu implementieren.

6. Computerlesbares Medium, auf dem das Programm nach Anspruch 5 gespeichert ist.

7. Elektrisches Arbeitsfahrzeug (EV) umfassend:
- mindestens ein Arbeitselement, wie einen Arm (A) und/oder einen Löffel (B),
- eine hydraulische Servolenkung (SV) und
- mindestens einen hydraulischen Aktuator (HA) zum Bewegen des mindestens einen Arbeitselements (A, B),
- einen Hydraulikkreis (HC), der eine elektrische Hydraulikpumpe (EHP) umfasst, die konfiguriert ist, um den Hydraulikaktuator und die Servolenkung mit Energie zu versorgen, wobei die Hydraulikpumpe konfiguriert ist, um als Reaktion auf Folgendes zu aktivieren:
. ein erstes Signal, das von einem Positionssensor (AS) erzeugt wird, der einem Lenkrad zugeordnet ist, zum Steuern der Servolenkung und
. mindestens ein zweites Signal, erzeugt durch Schnittstellenmittel (J, R), verschieden von der Lenkung, um den mindestens einen hydraulischen Aktuator, verschieden von der Servolenkung, zu steuern, und
- eine Verarbeitungseinheit nach Anspruch 4.

## Revendications

1. Procédé de gestion d'un circuit hydraulique d'un véhicule de travail électrique (EV), le circuit hydraulique (HC) comprenant une seule pompe hydraulique électrique (EHP) configurée pour alimenter :
- une direction assistée hydraulique (SV), et
- au moins un actionneur hydraulique (HA) d'un élément de travail (A, B) du véhicule de travail électrique,
la pompe hydraulique étant configurée pour s'activer en réponse à :
. un premier signal, généré par un capteur de position (AS) associé à un volant de direction, pour commander ladite direction assistée, et/ou
. au moins un second signal, généré par des moyens d'interface (J, R), différents de ladite direction, pour commander ledit au moins un actionneur hydraulique, différent de la direction assistée,
le procédé comportant
une procédure de calcul pour :
- une première valeur de vitesse de la pompe hydraulique en fonction d'une vitesse d'actionnement dudit volant de direction ; et
- au moins une seconde valeur de vitesse de rotation de la pompe hydraulique en fonction d'un écart desdits second moyens d'interface (J, R,) par rapport à une position de libération relative,
le procédé étant **caractérisé en ce qu'**il comporte en outre la commande de la pompe hydraulique selon la valeur plus élevée entre lesdites première et au moins seconde valeurs de vitesse ;
dans lequel ladite pompe hydraulique est configurée pour maintenir une vitesse de rotation inférieure ou égale à une vitesse minimale prédéterminée en l'absence desdits premier et second signaux ;
dans lequel ladite vitesse minimale est supérieure à zéro lorsqu'une température d'une huile hydraulique dans le circuit hydraulique est inférieure à un seuil prédéterminé et égale à zéro lorsque ladite température est supérieure ou égale audit seuil prédéterminé.

2. Procédé selon la revendication 1, dans lequel ladite première valeur de vitesse de la pompe hydraulique est exprimée au moyen d'une table de consultation en fonction de la vitesse d'actionnement dudit volant de direction.

3. Procédé selon la revendication 2, comprenant les étapes suivantes en succession cyclique :
- (Étape 1) Acquisition dudit premier signal et dudit second signal ;
- (Étape 2) Calcul desdites première et seconde valeurs de vitesse ;
- (Étape 3) vérification qu'au moins l'une desdites première et seconde valeurs est supérieure à zéro, si tel est le cas
- (Étape 4) régulation de la vitesse de pompe selon la valeur supérieure entre la première et au moins une seconde valeur de vitesse, ou sinon
- (Étape 5) régulation de la vitesse de pompe selon une valeur de vitesse minimale.

4. Unité de traitement (UC) permettant de commander un circuit hydraulique (HC) d'un véhicule de travail électrique, le circuit hydraulique comprenant une pompe hydraulique électrique (EHP) configurée pour alimenter en puissance
- une direction assistée hydraulique (SV) et
- au moins un actionneur hydraulique (HA) d'un élément de travail (A, B) du véhicule de travail électrique,
la pompe hydraulique étant configurée pour s'activer en réponse à
. un premier signal, généré par un capteur de position (AS) associé à un volant de direction, pour commander ladite direction assistée, et
. au moins un second signal, généré par des moyens d'interface (J, R,), différents de ladite direction, pour commander ledit au moins un actionneur hydraulique, différent de la direction assistée,
dans laquelle l'unité de traitement est configurée pour calculer :
- une première valeur de vitesse de pompe hydraulique en fonction d'une vitesse d'actionnement de ladite direction ; et
- au moins une seconde valeur de vitesse de rotation de la pompe hydraulique en fonction d'un écart desdits second moyens d'interface (J, R,) par rapport à une position de libération relative, l'unité de traitement étant **caractérisée en ce qu'**elle est configurée pour :
réguler la vitesse de pompe hydraulique selon la valeur plus élevée entre lesdites première et au moins seconde valeurs de vitesse, l'unité de traitement étant en outre configurée pour réguler la pompe hydraulique pour maintenir une vitesse de rotation inférieure ou égale à une vitesse minimale prédéterminée en l'absence desdits premier et second signaux ; dans lequel ladite vitesse minimale est supérieure à zéro lorsqu'une température d'une huile hydraulique dans le circuit hydraulique est inférieure à un seuil prédéterminé et égale à zéro lorsque ladite température est supérieure ou égale audit seuil prédéterminé.

5. Programme informatique comprenant des instructions pour amener l'unité de traitement selon la revendication 4 à mettre en œuvre le procédé selon l'une quelconque des revendications 1 à 3.

6. Support lisible par ordinateur sur lequel est stocké le programme selon la revendication 5.

7. Véhicule de travail électrique (EV) comprenant :
- au moins un élément de travail, tel qu'un bras (A) et/ou un godet (B),
- une direction assistée hydraulique (SV) et
- au moins un actionneur hydraulique (HA) pour déplacer ledit au moins un élément de travail (A, B),
- un circuit hydraulique (HC) comprenant une pompe hydraulique électrique (EHP) configurée pour alimenter ledit actionneur hydraulique et ladite direction assistée, dans lequel la pompe hydraulique est configurée pour s'activer en réponse à :
. un premier signal, généré par un capteur de position (AS) associé à un volant de direction, pour commander ladite direction assistée, et
. au moins un second signal, généré par des moyens d'interface (J, R,), différents de ladite direction, pour commander ledit au moins un actionneur hydraulique, différent de la direction assistée, et
- une unité de traitement selon la revendication 4.
